(19) Europäisches Patentamt
European Patent Office
Office européen des brevets

(11) **EP 4 209 472 A1**

(12) **EUROPEAN PATENT APPLICATION**
published in accordance with Art. 153(4) EPC

(43) Date of publication:
**12.07.2023 Bulletin 2023/28**

(21) Application number: **21864347.6**

(22) Date of filing: **01.09.2021**

(51) International Patent Classification (IPC):
*C04B 35/596* (2006.01)    *B64C 27/08* (2023.01)
*B64C 27/14* (2006.01)    *B64D 27/24* (2006.01)
*F16C 19/02* (2006.01)    *F16C 19/06* (2006.01)
*F16C 33/32* (2006.01)    *F16C 33/62* (2006.01)

(52) Cooperative Patent Classification (CPC):
**B64C 27/08; B64C 27/14; B64D 27/24;
C04B 35/584; F16C 19/02; F16C 19/06;
F16C 33/32; F16C 33/62**

(86) International application number:
**PCT/JP2021/032051**

(87) International publication number:
**WO 2022/050290 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2020   JP 2020148142
31.03.2021   JP 2021060258**

(71) Applicant: **NTN Corporation**
**Osaka-shi, Osaka 550-0003 (JP)**

(72) Inventors:
• **NAKAMURA Fumiya**
**Kuwana-shi, Mie 511-0867 (JP)**
• **HAYAKAWA Yasutake**
**Kuwana-shi, Mie 511-0867 (JP)**

(74) Representative: **Marks & Clerk LLP**
**15 Fetter Lane**
**London EC4A 1BW (GB)**

(54) **SILICON NITRIDE SINTERED BODY, ROLLING BODY USING SAME, AND BEARING**

(57) To provide: a silicon nitride sintered body having excellent mechanical property, in particular fracture toughness, and having long lifetime of a product into which the silicon nitride sintered body is processed; a rolling element using the silicon nitride sintered body; and a bearing. The silicon nitride sintered body contains a rare earth element and an aluminum element. The silicon nitride sintered body contains 6-13 wt% of the rare earth element in terms of oxide, and 6-13 wt% of the aluminum element in terms of oxide, relative to the total weight of the silicon nitride sintered body. The silicon nitride sintered body contains an inclusion (I) in a surface layer portion that is a region within 2 mm from a surface of the silicon nitride sintered body. A ratio of a total sectional area of the inclusion (I) to a total sectional area of the surface layer portion is 0.05% or more.

Fig.1

**Description**

TECHNICAL FIELD

The present invention relates to a silicon nitride sintered body, a rolling element using the same, and a bearing.

BACKGROUND ART

A silicon nitride ($Si_3N_4$) sintered body has superior mechanical property, heat conductivity, and electric isolation property, so that the silicon nitride sintered body has been accelerated to be applied to a bearing component, an engine component, a tool material, and a heat dissipation substrate material. It has been known that the silicon nitride sintered body is produced from a silicon nitride powder as a starting material. The silicon nitride powder is a sintered resistant powder, and thus a sintering additive is used together with the silicon nitride powder to produce a densified silicon nitride sintered body. Examples of the sintering additive generally include oxides of rare earth elements, aluminum oxide, magnesium oxide, and silicon oxide. In order to improve the mechanical property of the silicon nitride sintered body, it has been considered that a material containing a transition metal element is used as the sintering additive (for example, Patent Documents 1 and 2).

The silicon nitride powder is high in cost, and thus the price of the silicon nitride sintered body produced from the silicon nitride powder tends to be high. Thus, a producing method has been paid attention to that produces the silicon nitride sintered body from a silicon powder (silicon metal powder), as a starting material, that is low in cost relative to the silicon nitride powder, by causing the silicon powder to react and sinter (for example, Patent Documents 3 to 5). As such a producing method, a PS-RBSN (Post-Sintering of Reaction Bonded Silicon-Nitride) method has been known. The PS-RBSN method includes a first step that nitrides a green compact formed by molding a silicon powder, by applying a thermal treatment at a temperature of for example 1,100-1,450 °C under an environment containing nitrogen gas thereto, and a second step that densifies the nitride body obtained in the first step by applying a thermal treatment at a temperature of for example of 1,600-1,950 °C thereto.

PRIOR ART DOCUMENTS

PATENT DOCUMENTS

Patent Document 1: JP 2013-234120 A
Patent Document 2: WO 2015/099148 A
Patent Document 3: JP 2004-149328 A
Patent Document 4: JP 2008-247716 A
Patent Document 5: JP 2013-049595 A

SUMMERY OF THE INVENTION

PROBLEMS TO BE SOLVED BY THE INVENTION

In a case in which the silicon powder is not sufficiently nitrided in producing the silicon nitride sintered body by the PS-RBSN method, the silicon remains in the silicon nitride sintered body. The remaining silicon causes the deterioration of the mechanical property of the silicon nitride sintered body, so that the mechanical property of the silicon nitride sintered body produced by the PS-RBSN method might be inferior to that of the silicon nitride sintered body produced using the silicon nitride powder as a starting material. In addition, it has been found that the lifetime of the product such as a rolling element, into which the silicon nitride sintered body is processed might be short.

An object of the present invention is, in order to solve such problems, to provide: a silicon nitride sintered body having excellent mechanical property, in particular fracture toughness, and having long lifetime of a product into which the silicon nitride sintered body is processed; a rolling element using the silicon nitride sintered body; and a bearing.

MEANS FOR SOLVING THE PROBLEMS

A silicon nitride sintered body of the present invention includes a rear earth element and an aluminum element. The silicon nitride sintered body contains 6-13 wt% of the rare earth element in terms of oxide, relative to the total weight of the silicon nitride sintered body, and 6-13 wt% of the aluminum element in terms of oxide, relative to the total weight of the silicon nitride sintered body.

The rare earth element may contain one or more of Y, Ce, Nd and Eu. In particular, the rare earth element may contain Ce.

The silicon nitride sintered body may contain an inclusion (I) in a surface layer portion that is a region within 2 mm from a surface of the silicon nitride sintered body, and a ratio of a total sectional area of the inclusion (I) to a total sectional area of the surface layer portion may be 0.05% or more .

The inclusion (I) may be an inclusion (It) containing a transition metal element. In particular, the inclusion (It) may be a silicide of the transition metal element.

The transition metal element may contain one or more of Ti, Cr and Mn. In particular, the transition metal element may contain Cr.

The maximum diameter of the inclusion (I) may be 50 $\mu$m or less.

The silicon nitride sintered body may contain a pore in a surface layer portion that is a region within 2 mm from a surface of the silicon nitride sintered body, and the maximum diameter of the pore may be 50 $\mu$m or less.

A rolling element of the present invention is formed of the silicon nitride sintered body of the present invention.

A bearing of the present invention includes the rolling element of the present invention.

The bearing may be configured to support a rotational shaft of a driving part in an electric vertical take-off and landing aircraft including a plurality of the driving parts each having a rotor blade and a motor for rotating the rotor blade, the electric vertical take-off and landing aircraft being configured to fly by rotating rotor blades.

EFFECT OF THE INVENTION

The present invention can provide: a silicon nitride sintered body having excellent fracture toughness, and having long lifetime of a product into which the silicon nitride sintered body is processed; a rolling element using the silicon nitride sintered body; and a bearing.

BRIEF DESCRIPTION OF THE DRAWINGS

Fig. 1 is a vertical sectional view showing one example of a bearing according to the present invention.
Fig. 2 is a perspective view showing an electric vertical take-off and landing aircraft with the bearing according to the present invention.
Fig. 3 is a partial, sectional view showing a motor of a driving part of the electric vertical take-off and landing aircraft.

MODE FOR CARRYING OUT THE INVENTION

Hereinafter, an embodiment of the present invention is described.

Silicon nitride sintered body

A silicon nitride sintered body of the present embodiment contains a rare earth element and an aluminum element. The content of the rare earth element in the silicon nitride sintered body is 6-13 wt% in terms of oxide, relative to the total weight of the silicon nitride sintered body, and the content of the aluminum elements is 6-13 wt% in terms of oxide, relative to the total weight of the silicon nitride sintered body.

Examples of the rare earth element include yttrium (Y), lanthanum (La), cerium (Ce), samarium (Sm), neodymium (Nd), dysprosium (Dy), europium (Eu), and erbium (Er) . Of these rare earth elements, yttrium (Y), cerium (Ce), neodymium (Nd), and europium (Eu) are preferable. In particular, cerium (Ce) is more preferable because cerium (Ce) accelerates nitriding and improves producing efficiency.

The content of the rare earth element may be 6 wt% or more, preferably 6.5 wt% or more, or 7 wt% or more. The content of the rare earth element may be 13 wt% or less, preferably 12 wt% or less, or 11 wt% or less. With the content of the rare earth element within the above-described range, the silicon nitride sintered body having superior fracture toughness and long lifetime of a product into which the silicon nitride sintered body is processed can be easily obtained.

The rare earth element is derived from, for example, a sintering additive containing a rare earth element (normally, an oxide of a rare earth element) employed when the silicon nitride sintered body is produced. With the content of the rare earth element in the silicon nitride sintered body within the above-described range, in a case in which the silicon nitride sintered body is produced by the PS-RBSN method, the nitriding reaction of the silicon powder (silicon metal powder), which is a raw material, is accelerated and the sintering thereafter is also accelerated. The PS-RBSN method is a two-step sintering method including a silicon nitriding step and a sintering step thereafter. The content of the rare earth element may be adjusted based on a compounding amount of the sintering additive containing the rare earth element (for example, the oxide of the rare earth element) compounded to the raw material.

The content of the aluminum element may be 6 wt% or more, preferably 6.5 wt% or more, or 7 wt% or more. The content of the aluminum element may be 13 wt% or less, 12 wt% or less, or 11 wt% or less. The content of the aluminum element (in terms of oxide) may be within $\pm$ 5 wt%, $\pm$ 2 wt%, or $\pm$ 1 wt% of the content of the rare earth element (in terms of oxide), or alternatively the content of the aluminum element may be equal to the content of the rare earth element. With the content of the aluminum element within the above-described range, the silicon nitride sintered body having superior fracture toughness and long lifetime of a product into which the silicon nitride sintered body is processed can be easily obtained.

The aluminum element is derived from, for example, a sintering additive containing an aluminum element (normally, an aluminum oxide) employed when the silicon nitride sintered body is produced. With the content of the aluminum element in the silicon nitride sintered body within the above-described range, in a case in which the silicon nitride sintered body is produced by the PS-RBSN method, the sintering is accelerated. The content of the aluminum element may be adjusted based on a compounding amount of the sintering additive containing the aluminum element (for example, the aluminum oxide) compounded to the raw material.

The content of each of the rare earth element and the aluminum element is determined using an X-ray fluorescence analysis device (XRF), an energy dispersive X-ray spectroscopy (EDX), or an inductively coupled plasma (ICP) atomic emission spectroscopy. Specifically, the content of each of the rare earth element and the aluminum element in the silicon nitride sintered body is determined using the above-described device and is converted into the oxide of the rare earth element (RE) ($RE_2O_3$ or $REO_2$) or the aluminum oxide ($Al_2O_3$). Other elements that form the silicon nitride sintered body may be also analyzed using the above-described device, and the total weight of the silicon nitride sintered body is calculated and then the above-described content of each of the rare earth element and the aluminum element is determined. In a case in which the raw material powder employed for producing the silicon nitride sintered body contains silicon (silicon metal powder) and the silicon is turned into $Si_3N_4$ by the nitriding thereof, the weight of $Si_3N_4$ in the silicon nitride sintered body is 1.67 times as large as the weight of the silicon. Thus, considering the weight change of the silicon before and after the nitriding, the content of each of the oxide of the rare earth element and the aluminum oxide can be calculated based on the composition of the raw material powder.

The silicon nitride sintered body of the present embodiment preferably includes an inclusion (I) in a surface layer portion which is a region within 2 mm from the surface of the silicon nitride sintered body. The inclusion (I) contains a component of element other than the silicon nitride. Examples of the inclusion (I) include an inclusion containing a transition metal element (It), and an inclusion containing a not-nitrided silicon element (Is). The inclusion (It) is preferably a silicide of a transition metal element. The inclusion (Is) is, for example, an agglomerate of a not-nitrided silicon element. The inclusion (I) preferably contains the inclusion (It) and not contains the inclusion (Is) or a content rate of the inclusion (Is) is small. The inclusion means that the all portion thereof exists in the surface layer portion which is a region within 2 mm from the surface of the silicon nitride sintered body.

The inclusion (It) is derived from, for example, the sintering additive containing the transition metal element (normally, an oxide of the transition metal element) employed when the silicon nitride sintered body is produced. For example, the silicide of the transition metal element is formed when the silicon nitride sintered body is produced. In a case in which the silicon nitride sintered body is produced by the PS-RBSN method, the nitriding of the silicon powder can be accelerated and further the growing of an acicular crystal of the silicon nitride can be accelerated by employing the sintering additive containing the transition metal element. Thus, thermal treatment time required for the nitriding of the silicon can be reduced, and the energy efficiency in producing the silicon nitride sintered body can be improved.

In a case in which the silicon nitride powder is contained in the raw material for producing the silicon nitride sintered body, when the silicon nitride powder and the sintering additive containing the transition metal element such as chromium oxide ($Cr_2O_3$) (the oxide of the transition metal element) are mixed, the sintering additive causes the oxidation of the silicon nitride powder, so that the composition of the raw material is changed and thus the favorable sintering might not be caused. However, in a case in which the silicon nitride sintered body is produced by the PS-RBSN method, the silicon powder is mainly employed as the raw material, and thus the content of the silicon nitride powder in the raw material can be reduced. As a result, the above-described disadvantage is hardly caused, and thus a dense silicon nitride sintered body can be obtained.

When the silicon nitride sintered body is produced by the PS-RBSN method, in a case in which the nitriding of the silicon powder (silicon metal powder), which is a raw material, is insufficient, the inclusion (Is) might be formed. In a case in which the inclusion (Is) having a large diameter is formed or the rate of the inclusion (Is) is increased in the surface layer portion, the mechanical property such as the fracture toughness of the silicon nitride sintered body is deteriorated, and the lifetime of a product into which the silicon nitride sintered body is processed is deteriorated. It is preferable that an amount of the inclusion (Is) in the surface layer portion of the silicon nitride sintered body is small, and thus no inclusion (Is) is more preferable.

The transition metal element is not especially limited as long as the transition metal element is any element that belongs to the groups 3 to 11 in the IUPAC periodic table. The transition metal element is preferably one or more of Ti, Cr, and Mn. The transition metal element more preferably contains Cr. The transition metal element containing Cr can further improve the fracture toughness of the silicon nitride sintered body.

The content of the transition metal element in the silicon nitride sintered body may be preferably 0.1 wt% or more, more preferably 0.3 wt% or more, or 0.5 wt% or more in terms of oxide, relative to the total weight of the silicon nitride sintered body. In addition, the content of the transition metal element in the silicon nitride sintered body may be normally 5 wt% or less, 3 wt% or less, preferably 2 wt% or less, or 1 wt% or less in terms of oxide, relative to the total weight of the silicon nitride sintered body. The above-described content of the transition metal element is determined by the similar method that determines the content of each of the rare earth element and the aluminum element.

The maximum diameter of the inclusion (I) in the surface layer portion of the silicon nitride sintered body is not especially limited. Specifically, the maximum diameter of the inclusion (I) may be 50 $\mu$m or less, 40 $\mu$m or less, 30 $\mu$m or less, or 25 $\mu$m or less, and normally 0.5 $\mu$m or more. The maximum diameter of the inclusion (I) in the surface layer portion means a diameter of the inclusion (I) having the largest diameter among the inclusions (I) in the surface layer portion. With the maximum diameter of the inclusion (I) within the above-described range, the inclusion (I) is prevented from being an origin of fracture, so that the silicon nitride sintered body having superior fracture toughness can be easily obtained. Further, with the maximum diameter of the inclusion (I) within the above-described range, the particle shedding of the inclusion from the silicon nitride sintered body, which leads to the defect, can be suppressed, and thus superior lifetime of a product such as a rolling element of a bearing, into which the silicon nitride sintered body is processed can be easily obtained. The maximum diameter of the inclusion (I) is adjusted based on, for example, a degree of the nitriding of the silicon powder as a raw material, a compounding amount and/or a particle diameter of the sintering additive containing the transition metal element added to the raw material, and the kind of the transition metal.

In a section of the silicon nitride sintered body, a ratio of a total sectional area of the inclusion (I) to a total sectional area of the surface layer portion ((the total sectional area of the inclusion (I)) / (the total sectional area of the surface layer portion) × 100) may be preferably 0.05% or more, 0.1% or more, 0.15% or more, 0.3% or more, or 0.6% or more. The above-described ratio may be normally 7.0% or less, 3. 0% or less, 2. 0% or less, or 1.5% or less. The above-described ratio of the inclusion (I) is a ratio of the total sectional area that is the sum of the sectional area of all inclusions in the surface layer portion, to the total sectional area of the surface layer portion. With the above-described ratio within the above-described range, the silicon nitride sintered body having superior fracture toughness and superior lifetime of a product into which the silicon nitride sintered body is processed can be easily obtained. In a case in which the ratio is too large, the particle shedding of the inclusion is continuously caused, which may affect the result of the bearing lifetime test. The ratio of the inclusion (I) is adjusted based on, for example, a degree of the nitriding of the silicon powder as a raw material, a compounding amount and/or a particle diameter of the sintering additive containing the transition metal element added to the raw material, and the kind of the transition metal.

The silicon nitride sintered body of the present embodiment preferably has a pore in the surface layer portion which is a region within 2 mm from the surface of the silicon nitride sintered body. The maximum diameter of the pore in the section of the silicon nitride sintered body is preferably 50 $\mu$m or less. The maximum diameter of the pore may be 40 $\mu$m or less, 30 $\mu$m or less, or 25 $\mu$m or less, or alternatively the silicon nitride sintered body need not have a pore. With the maximum diameter of the pore within the above-described range, when the silicon nitride sintered body is processed into a product such as a rolling element of a bearing, superior lifetime of the product can be easily obtained. The pore in the surface layer portion means a pore existing in the surface layer portion which is a region within 2 mm from the surface of the silicon nitride sintered body, specifically the all portion of the pore existing in the surface layer portion. The maximum diameter of the pore in the surface layer portion means a diameter of the pore having the largest diameter among the pores in the surface layer portion. The maximum diameter of the pore is adjusted, for example, by adjusting a content of the silicon nitride employed as a raw material and/or a compounding amount of the sintering additive when the silicon nitride sintered body is produced by the PS-RBSN method.

The maximum diameter of the inclusion (I), the ratio of the inclusion (I), and the maximum diameter of the pore are defined by measuring the inclusion (I) and the pore, the all portion thereof existing within the surface layer portion on a section of a test piece produced by a method described in the following example. The maximum diameter of the inclusion (I), the ratio of the inclusion (I), and the maximum diameter of the pore are calculated by a method described in the following example.

As described below, the silicon nitride sintered body of the present embodiment is mainly produced by the PS-RBSN method. In the silicon nitride sintered body produced by the PS-RBSN method, a relative density of the green compact is increased after the nitriding, so that a shrinkage rate of the silicon nitride sintered body produced by the PS-RBSN method is smaller than that of the sintered body produced from the silicon nitride as a raw material. The shrinkage rate is calculated from the following formula. The respective sizes in the formula mean sizes of the green compact and the silicon nitride sintered body corresponding to each other. For example, in a case in which both of the green compact and the silicon nitride sintered body are spherical shapes, diameters thereof can be employed.

$$\text{Shrinkage rate (\%) = ((size of green compact) - (size of silicon}$$

$$\text{nitride sintered body)) / size of green compact} \times 100$$

The shrinkage rate of the silicon nitride sintered body of the present embodiment is not especially limited, however it may be preferably 15% or less, 14% or less, or 13% or less, from a viewpoint of dimensional accuracy of the sintered body. The shrinkage rate may be, for example, 7% or more, 8% or more, or 10% or more.

The silicon nitride sintered body of the present embodiment contains the rare earth element by 6-13 wt% in terms of oxide relative to the total weight of the silicon nitride sintered body, and the aluminum element by 6-13 wt% in terms of oxide relative to the total weight of the silicon nitride sintered body. For example, by employing appropriate amounts of the sintering additive containing the rare earth element and the sintering additive containing the aluminum in producing the silicon nitride sintered body, the sintering can be sufficiently caused even in a case in which the silicon powder is employed as a raw material. As a result, superior fracture toughness can be obtained. The fracture toughness (JIS R 1607) is, for example, 3 $MPa \cdot m^{1/2}$ or more, preferably 4 $MPa \cdot m^{1/2}$ or more, and more preferably 5 $MPa \cdot m^{1/2}$ or more. The fracture toughness is, for example, 8 $MPa \cdot m^{1/2}$ or less.

An especially preferable silicon nitride sintered body of the present embodiment is the silicon nitride sintered body that contains the rare earth element and the aluminum element and has an inclusion (I) and a pore in a surface layer portion which is a region within 2 mm from the surface of the silicon nitride sintered body. A content of the rare earth element is 6-13 wt% in terms of oxide relative to the total weight of the silicon nitride sintered body. A content of the aluminum element is 6-13 wt% in terms of oxide relative to the total weight of the silicon nitride sintered body. A maximum diameter of the inclusion (I) in the surface layer portion is 50 $\mu$m or less. In a section of the silicon nitride sintered body, a ratio of a total sectional area of the inclusion (I) to a total sectional area of the surface layer portion is 0.1% or more. A maximum diameter of the pore in the surface layer portion is 50 $\mu$m or less. The above-described element and the above-described numeral range may be appropriately applied to this configuration.

The shape of the silicon nitride sintered body of the present embodiment is not especially limited, and thus a spherical shape, a cylindrical shape, a conical shape, a truncated conical shape, or a rectangular parallelepiped shape may be appropriately selected based on its usage, however the spherical shape is preferable. The size of the silicon nitride sintered body is not also especially limited, and for example, the diameter of the spherical shape may be set to 0.5-10 cm, and the diameter of a bottom surface of the cylindrical shape may be set to 0.5-15 cm and the height thereof may be set to 3-20 cm.

The silicon nitride sintered body is preferably produced by the PS-RBSN method (a two-step sintering method). Specifically, the silicon nitride sintered body is produced by the following first or second method.

First method

In the PS-RBSN method, powder is granulated to improve flowability of the powder. The first method is to produce the silicon nitride sintered body containing the rare earth element and the aluminum element, the first method including, for example, a granulating step that forms granulated powder from a raw material powder containing a silicon powder and a sintering additive, a molding step that molds the obtained granulated powder into a green compact, a degreasing step, and a sintering step that sinters the degreased green compact. Polishing may be performed on the silicon nitride sintered body as needed after the sintering step.

In the granulating step, the raw material and a binder are mixed in water and/or an organic solvent (for example, ethanol) to form slurry and then the slurry is spray-granulated and dried using a spray dry to form a granulated powder. An organic binder may be employed as the binder. For example, 1-10 wt% of the binder relative to the whole of the raw material powder is compounded.

In the following molding step, the granulated powder is molded into a predetermined shape to form a green compact. In the degreasing step, the obtained green compact is degreased by heating the green compact under a nitrogen atmosphere at a temperature of 700-1,000 °C.

The sintering step includes a first step that nitrides the degreased green compact by applying a thermal treatment, for example, under a nitrogen atmosphere at a temperature of 1,200-1,500 °C, and a second step that sinters the obtained nitride body by applying a thermal treatment, for example, under a nitrogen atmosphere at a temperature of 1,600-1,950 °C (preferably 1,600-1,900 °C) . In the first step, in order to completely nitride the silicon, it is preferable that the temperature is kept for a long time (for example, one hour or more) at 1,200-1,500 °C (preferably 1,300-1,500 °C) . In this specification, the manner of "temperature is kept (temperature keeping)" means that the temperature is kept at a specified temperature for a certain time. A temperature increasing rate when proceeding from the first step to the second step may be, for example, 2 °C/minute or more, 2.5 °C/minute or more, or 5 °C/minute or more. The temperature increasing rate is, for example, 20 °C/minute or less, preferably 15 °C/minute or less.

As described below in the following example, the nitriding is accelerated by adjusting the compounding amount and/or the particle diameter of the sintering additive, and the kind of the rare earth element. As a result, the temperature keeping in the first step can be omitted. Further, the temperature increasing rate when proceeding from the first step to the second step can be increased. Thus, the producing time can be shortened and the energy efficiency in producing can be improved.

Second method

The second method is to produce the silicon nitride sintered body containing the rare earth element and the aluminum element, the second method including, for example, a mixing step that mixes the raw material powder containing the silicon powder and the sintering additive in a dry manner, a molding step that molds the mixed raw material powder into a green compact, and a sintering step that sinters the green compact. Unlike the first method, the second method performs all steps in the PS-RBSN method in a dry manner. Further, polishing may be performed on the silicon nitride sintered body as needed after the sintering step.

In the mixing step, the raw material powder is mixed in a dry manner without using water and an organic solvent. Further, in this step, it is preferable that the raw material powder is mixed without using a binder. The particle diameter of the powder after mixing is not especially limited, however D90 is preferably 10-100 $\mu$m, more preferably 10-50 $\mu$m, and further more preferably 10-20 $\mu$m. Further, D50 is preferably 2-10 $\mu$m, more preferably 3-9 $\mu$m, and further more preferably 4-8 $\mu$m. With D90 and/or D50 within the above-described ranges, superior flowability and moldability can be shown and thus a dense silicon nitride sintered body can be obtained. D50 and D90 denote a 50% cumulative particle diameter and a 90% cumulative particle diameter, respectively, and are measured by a laser diffraction particle size analyzer.

In the following molding step, the mixed powder is molded into a predetermined shape to form a green compact. The sintering step includes a first step that nitrides the obtained green compact by applying a thermal treatment, for example, under a nitrogen atmosphere at a temperature of 1,200-1,500 °C, and a second step that sinters the obtained nitride body by applying a thermal treatment, for example, under a nitrogen atmosphere at a temperature of 1,600-1,950 °C (preferably 1,600-1,900 °C) . In the first step, from a viewpoint of the producing efficiency, it is preferable that the temperature within 1,200-1,500 °C is not kept for one hour or more. Specifically, it is preferable that the nitriding is performed while increasing the temperature from, for example, approximately 1,100 °C to a sintering temperature in the second step at a specified temperature increasing rate. The temperature increasing rate may be, for example, 2 °C/minute or more, 2.5 °C/minute or more, or 5 °C/minute or more. The temperature increasing rate is, for example, 20 °C/minute or less, preferably 15 °C/minute or less.

The second method has the following advantageous effects compared to the first method.

In a case in which the all steps in the PS-RBSN method is performed in a dry manner, for example, the oxidation of the silicon powder caused when using the water solvent can be prevented, and the environmental impact when using the organic solvent such as ethanol can be reduced.

In a case in which the silicon nitride sintered body is produced by the PS-RBSN method without using the organic binder, the shrinkage caused by the sintering can be reduced and thus the dimensional accuracy of the sintered body can be improved. In the first method, since the organic binder is used for granulating particles, the degreasing step is necessary thereafter. In such a case, a cavity is caused after the organic binder is removed in the degreasing step, and thus the shrinkage caused by the sintering might be increased.

Further, when the shrinkage is reduced, the polishing time in the following polishing step can be shortened.

In a case in which the silicon nitride sintered body is produced by the PS-RBSN method without using the organic binder, the degreasing step can be omitted and thus the greenhouse gases such as $CO_2$ caused by decomposing the binder in the degreasing step can be prevented from generating, so that the environmental impact can be reduced.

Generally, in a conventional method that employs $Si_3N_4$ powder as a raw material to form a dense sintered body, it is necessary to employ fine $Si_3N_4$ powder (D50 is 1 $\mu$m or less). Since such fine powder is inferior in flowability and moldability, it is necessary that the raw material powder and the binder are turned into slurry using water or ethanol and then the slurry is spray-granulated and dried using a spray dry to form the granulated body. However, in the PS-RBSN method, the silicon powder is turned into fine powder by breakage due to the volume expansion in the nitriding step, so that it is not necessary to employ the fine powder such as $Si_3N_4$ powder as the raw material to form the dense sintered body. Since the raw material powder is not fine powder, the flowability and moldability required to form the molded body can be secured without using the granulated powder.

In the producing method of the silicon nitride sintered body such as the first method and the second method, the sintering additive employed in the raw material powder is preferably a sintering additive containing the rare earth element, the aluminum element, or the transition metal element, and more preferably a sintering additive containing the oxide of the rare earth element, the aluminum element, or the transition metal element. The sintering additive containing the rare earth element preferably contains any one of $Y_2O_3$, $CeO_2$, $Nd_2O_3$, and $Eu_2O_3$. The sintering additive containing the transition metal element preferably contains any one of $Cr_2O_3$, $TiO_2$, $MnO$, and $Fe_2O_3$, more preferably contains any one of $Cr_2O_3$, $TiO_2$, and $MnO$, and further more preferably contains $Cr_2O_3$.

The raw material powder may contain, in addition to the silicon powder and the sintering additive, the silicon nitride powder and/or the organic binder, and the sintering additive containing an element other than the rare earth element, the aluminum element and the transition metal element.

The content of the silicon powder in the raw material powder is preferably 45 wt% or more, more preferably 50 wt% or more, further more preferably 55 wt% or more, or 60 wt% or more, relative to the total weight of the silicon powder, the silicon nitride powder and the sintering additive. The content of the silicon powder in the raw material may be normally 90 wt% or less, 85 wt% or less, or 80 wt% or less. The content of the silicon nitride powder in the raw material powder is normally 30 wt% or less, preferably 25 wt% or less, more preferably 20 wt% or less, or 15 wt% or less, relative to the above-described total weight. However, the raw material powder need not contain the silicon nitride powder.

The content of the sintering additive containing the rare earth element (for example, the oxide of the rare earth element) in the raw material powder is 7 wt% or more, preferably 9 wt% or more, more preferably 9.5 wt% or more, or 10 wt% or more, relative to the above-described total weight. The content of the rare earth element may be 17 wt% or less, 15 wt% or less, or 14.5 wt% or less. The content of the sintering additive containing the aluminum element (for example, the aluminum oxide) in the raw material powder is 5 wt% or more, preferably 9 wt% or more, more preferably 9.5 wt% or more, or 10 wt% or more, relative to the above-described total weight. The content of the aluminum element may be 17 wt% or less, 15 wt% or less, or 14.5 wt% or less. The content of the sintering additive containing the transition metal element (for example, the oxide of the transition metal element) in the raw material powder is preferably normally 0.1 wt% or more, more preferably 0.5 wt% or more, and normally 5 wt% or less, preferably 3 wt% or less. In a case in which the content of the sintering additive in the raw material powder is less, the dense silicon nitride sintered body is hardly obtained. In a case in which the content of the sintering additive in the raw material is much, the mechanical property such as the fracture toughness of the silicon nitride sintered body is deteriorated.

The average particle diameter of the silicon powder in the raw material powder may be, for example, 5 μm or less. The average particle diameter of the silicon nitride may be, for example, 0.5 μm or less. The average particle diameter of the sintering additive may be normally 10 μm or less, 7 μm or less, 5 μm or less, 3 μm or less, 2 μm or less, 1 μm or less, or 0.4 μm or less, depending on the kind of the sintering additive.

One aspect of the above-described second method is to produce the silicon nitride sintered body containing the rare earth element and the aluminum element, the one aspect including a mixing step that mixes the raw material powder containing the silicon powder and the sintering additive in a dry manner, a molding step that molds the mixed raw material powder into a green compact, and a sintering step that sinters the green compact. Further, the silicon powder in the raw material powder is 45 wt% or more relative to the whole of the raw material powder.

Further, the above-described one aspect of the second method may include one or more of the following features (1) to (7) .

(1) the mixing step mixes the raw material powder without a binder.
(2) the sintering step includes, in the process increasing the temperature within 1,000-1,200 °C to the sintering temperature, a step that increases the temperature at a temperature increasing rate of 15 °C/minute or less without keeping a specified temperature for more than one hour.
(3) the sintering temperature is a range of 1,600-1,900 °C.
(4) the sintering additive contains the rare earth oxide and the aluminum oxide, and the raw material powder contains 9.5-17 wt% of the rare earth oxide relative to the whole of the raw material powder and 9.5-17 wt% of the aluminum oxide relative to the whole of the raw material powder.
(5) the rare earth oxide includes one or more of $Y_2O_3$, $CeO_2$, $Nd_2O_3$, and $Eu_2O_3$.
(6) the sintering additive contains the transition metal compound, and the raw material powder contains 0.1-5 wt% of the transition metal compound relative to the whole of the raw material powder.
(7) the transition metal element includes one or more of Ti, Cr, and Mn.

For example, by compounding the rare earth oxide by 9.5-17 wt% and the aluminum oxide by 9.5-17 wt% as the sintering additive, into the raw material powder, the nitriding of the silicon and the sintering thereafter can be accelerated (the above-described feature (4)). Further, by compounding the transition metal compound by 0.1-5 wt% as the sintering additive, the nitriding of the silicon can be accelerated (the above-described feature (6)). Accelerating the nitriding of the silicon eliminates the need for keeping temperature of 1,100-1,450 °C for a long time under the nitrogen atmosphere, which is normally performed, so that this method can improve the energy efficiency.

Usage of silicon nitride sintered body

The usage of the silicon nitride sintered body of the present embodiment is not especially limited, but may be applied to a bearing component, a roll material for rolling, a compressor vane, a gas turbine vane, an engine component and the like because of its superior mechanical property and heat conductivity. Examples of the bearing component include components of a rolling bearing, a linear guide bearing, a ball bearing, and a linear bearing. In particular, the silicon nitride sintered body is preferably used as a rolling element of the bearing.

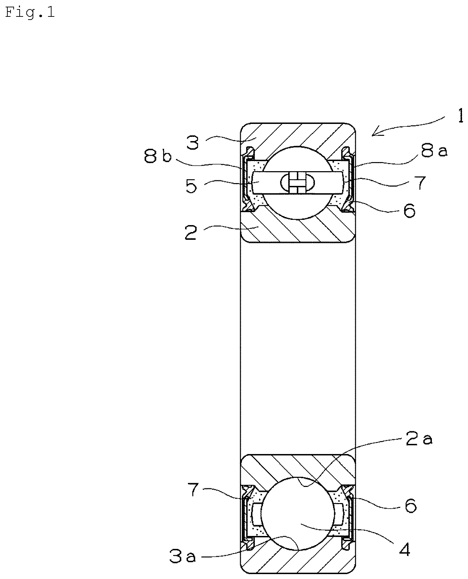

A bearing of the present embodiment is described with reference to Fig. 1. Fig. 1 is a sectional view of a deep groove ball bearing. A rolling bearing 1 includes an inner ring 2 having an inner ring raceway surface 2a on an outer peripheral surface, an outer ring 3 having an outer ring raceway surface 3a on an inner peripheral surface, and a plurality of balls (rolling elements) 4 disposed between the inner ring raceway surface 2a and the outer ring raceway surface 3a. The inner ring 2 and the outer ring 3 are disposed coaxially to each other. The balls 4 are formed by the silicon nitride sintered body. The ball 4 is retained by a cage 5. Both openings 8a, 8b in an axial direction of the inner and outer rings are sealed by seal member 6, and a grease composition 7 is sealed around at least the balls 4. The grease composition 7 is interposed between the balls 4 and the raceway surfaces to lubricate the balls 4.

Usage of bearing

The usage of the bearing of the present embodiment is not especially limited, but may be suitable to a structure in which electric current possibly flows in the bearing when in use because the bearing including the rolling element formed by the silicon nitride sintered body has a function of an isolating bearing. For example, the bearing may be applied to the usage of a traction motor for railway vehicles, a general motor, or a generator. The bearing may be also applied to a flying car that has been paid attention thereto in recent years as a substitute traveling means for automobiles. The flying car is expected to solve various social problems and to be used in various scenes such as local travelling, regional travelling, sightseeing, leisure, emergency medical service, and disaster relief.

As the flying car, a vertical take-off and landing aircraft (VTOL) has been attracting a log of attention. The vertical take-off and landing aircraft can vertically ascend and descend between the air and a take-off and landing area, which eliminates the need for a runway and thus realizes superior usability. In particular, an electric vertical take-off and landing aircraft (eVTOL) that flies using a battery and a motor is in a mainstream of development because of a social demand for reducing $CO_2$ in recent years.

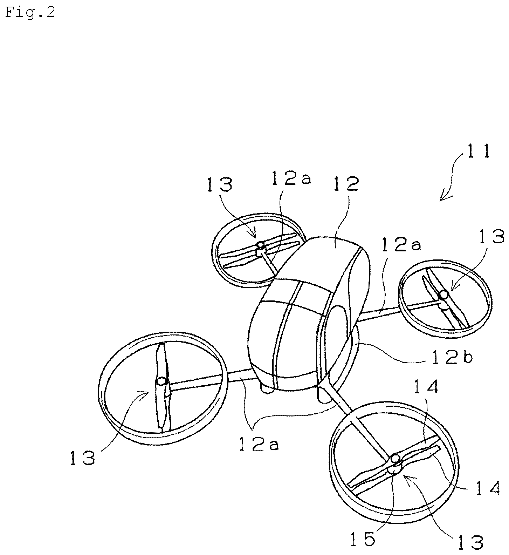

The electric vertical take-off and landing aircraft in which the bearing of the present invention is mounted is described with reference to Fig. 2. An electric vertical take-off and landing aircraft 11 shown in Fig. 2 is a multicopter including a body part 12 disposed in a central portion of the aircraft, and four driving parts 13 disposed at front, rear, left and right sides of the aircraft, respectively. The driving part 13 is configured to cause lifting force and driving force of the electric vertical take-off and landing aircraft 11. The electric vertical take-off and landing aircraft 11 flies by driving the driving part 13. As long as a plurality of the driving parts 13 are disposed in the electric vertical take-off and landing aircraft 11, the number of the driving parts 13 is not limited to four.

The body part 12 has a living space for passengers (for example, one to two passengers). In the living space, an operation system for determining a travelling direction and an altitude, and an instrument for displaying an altitude, a speed, a flying position and the like are disposed. Four arms 12a extend from the body part 12, and the driving part 13 is disposed on the distal end of each arm 12a. In Fig. 2, a ring portion that surrounds a rotor blade 14 is disposed integrally with the arm 12a for protecting the rotor blade 14. Further, a skid 12b that supports the aircraft in landing is disposed on a lower portion of the body part 12.

The driving part 13 has the rotor blade 14, and a motor 15 that rotates the rotor blade 14. A pair of the rotor blades 14 is disposed in the driving part 13 at both sides in an axial direction to across the motor 15. Each rotor blade 14 has two blades extending radially outward.

A battery (not shown) and a control unit (not shown) are disposed in the body part 12. The control unit is also referred to as a flight controller. The electric vertical take-off and landing aircraft 11 is controlled by the control unit in the following manner. The control unit outputs an instruction for changing rotation speed to the motor 15 in order to adjust the lifting force based on the difference between the present posture and the target posture. An amplifier disposed in the motor 15 adjusts the electric power supplied from the battery to the motor 15 based on the instruction so as to change the rotation speed of the motor 15 (and the rotor blade 14) . The adjustment of the rotation speed of the motor 15 is performed in all motors 15 at the same time, so that the posture of the aircraft is determined.

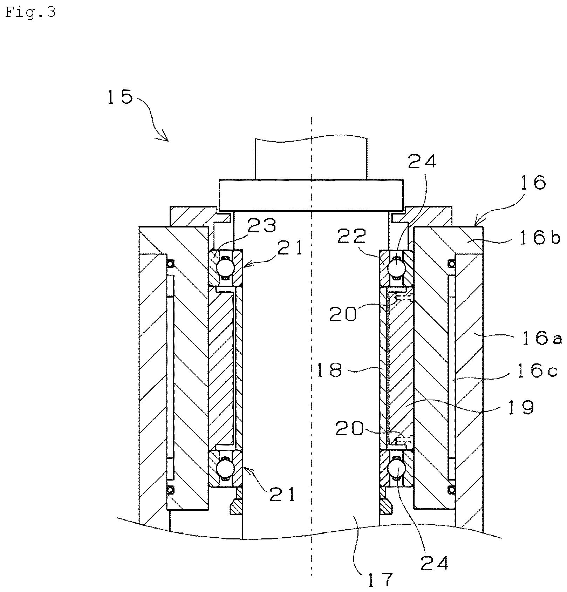

Fig. 3 is a partial, sectional view showing the motor in the driving part. In Fig. 3, the rotor blade is mounted to one end (upper side in Fig. 3) of a rotational shaft 17 of the motor 15, and a rotor is mounted to the other end (lower side in Fig. 3) of the rotational shaft 17. The rotor is disposed to face a stator fixed to a housing and is rotatable relative to the stator. The motor 15 may be an outer rotor type brushless motor or an inner rotor type brushless motor.

In Fig. 3, the motor 15 includes a housing (device housing) 16, the rotor (not shown), the stator (not shown), the amplifier (not shown), and two rolling bearings (deep groove ball bearings) 21, 21. The housing 16 has an outer cylinder 16a and an inner cylinder 16b. A coolant passage 16c is formed between the outer cylinder 16a and the inner cylinder 16b. When a coolant flows into the passage 16c, an excessive temperature increase can be prevented. Each of the rolling bearings 21, 21 rotatably supports the rotational shaft 17 in the inner cylinder 16b. In Fig. 3, a ball 24 of the rolling bearing 21 is formed by the above-described silicon nitride sintered body. The rolling bearing 21 corresponds to the bearing of the present invention.

In the rolling bearing 21, an outer shape of an outer ring 23 has substantially the same shape as a fitting portion on an inner periphery of the housing, and the outer ring 23 is directly fitted to the housing 16 without a bearing housing or the like. An inner ring seat 18 and an outer ring seat 19 are inserted between the rolling bearings 21, 21, respectively, and are pressurized. Nozzle members 20, 20 are disposed in the outer ring seat 19 for injecting lubrication oil for cooling and lubricating the rolling bearings 21, 21. The nozzle member 20 has a lubrication oil passage therein that leads air oil supplied from an external lubrication oil supplier (not shown) to a bearing space.

The electric vertical take-off and landing aircraft has a high capacity motor compared to a drone, and thus the driving current is large and the voltage (shaft voltage) caused in the rotational shaft of the motor is increased. Accordingly, electrolytic corrosion might be caused, however since the bearing having the rolling elements each formed by the above-described silicon nitride sintered body is employed, the electrolytic corrosion due to the energizing can be favorably prevented while keeping a long product lifetime. As a result, a failure of the bearing can be prevented and safe flight of the electric vertical take-off and landing aircraft can be secured. Further, the weight of the bearing can be reduced by using the rolling element formed by the silicon nitride sintered body, compared to the rolling element formed of iron-based material. Thus, such a bearing is suitably employed in the electric vertical take-off and landing aircraft for which the weight reduction is especially required.

The configuration of the bearing in the driving part is not limited to the configuration shown in Fig. 3. In the configuration shown in Fig. 3, the rotational shaft of the motor and the rotational shaft of the rotor blade are the same component, however the rotational shaft of the motor and the rotational shaft of the rotor blade may be coupled via a transmission mechanism. In this case, the rolling bearing that supports the rotational shaft in the driving part may support either the rotational shaft of the motor or the rotational shaft of the rotor blade.

EXAMPLE

Hereinafter, the present invention is described in further detail with reference to Examples and Comparative examples, however the present invention is not limited to Examples and Comparative examples.

Test Example 1

The raw material powder having each compound rate shown in Table 2 was prepared. The organic binder was added to the raw material by 3 wt%. A silicon nitride ball was employed as medium. By using ethanol as solvent, they were mixed for 48 hours by a ball mill at a rotation speed of 200 rpm. The slurry after mixing was dried and granulated by the spray dry method to form granulated powder. The material employed for forming the granulated powder is shown in Table 1.

Table 1

| Material | Manufacturer | Purity (%) | Average particle diameter ($\mu$m) |
|---|---|---|---|
| Si | Kojundo Chemical Lab. Co., Ltd. | > 99.9 | ~ 5 |
| $Si_3N_4$ | Kojundo Chemical Lab. Co., Ltd. | > 99.9 | ~ 0.5 |
| $Al_2O_3$ | Kojundo Chemical Lab. Co., Ltd. | > 99.9 | ~ 1 |
| $Y_2O_3$ | Kojundo Chemical Lab. Co., Ltd. | > 99.99 | ~ 0.4 |
| $CeO_2$ | Kojundo Chemical Lab. Co., Ltd. | > 99.0 | ~ 7 |
| $Nd_2O_3$ | Kojundo Chemical Lab. Co., Ltd. | > 99.9 | ~ 7 |
| $Eu_2O_3$ | Kojundo Chemical Lab. Co., Ltd. | > 99.9 | ~ 5 |
| $Cr_2O_3$ | Kojundo Chemical Lab. Co., Ltd. | > 99.9 | ~ 3 |
| $TiO_2$ | Kojundo Chemical Lab. Co., Ltd. | > 99.9 | ~ 2 |
| MnO | Kojundo Chemical Lab. Co., Ltd. | > 99.9 | ~ 5 |
| $Fe_2O_3$ | Kojundo Chemical Lab. Co., Ltd. | > 99.9 | ~ 1 |

Examples 1 to 26 and 30, Comparative examples 1 and 2

A spherical green compact having a diameter of 11 mm was molded from the obtained granulated powder by the cold isostatic pressing method using a rubber mold. The green compact was degreased under a nitrogen atmosphere at a temperature of 800 °C for 48 hours, and then the temperature was increased to 1,400 °C at a temperature increasing rate of 2.5 °C/minute. The degreased green compact was nitrided under a nitrogen atmosphere (pressure of 0.9 MPa) at a temperature of 1,400 °C for 4 hours. Thereafter, the temperature was increased to a sintering temperature of 1,550-1,950 °C at a temperature increasing rate of 2.5-20 °C/minute and the nitrided green compact was sintered under a nitrogen atmosphere (pressure of 0.9 MPa) at the sintering temperature for 4 hours, so that a silicon nitride sintered body was formed.

Examples 27 to 29

A spherical green compact having a diameter of 11 mm was molded from the obtained granulated powder by a cold isostatic pressing method using a rubber mold. The green compact was degreased under a nitrogen atmosphere at a temperature of 800 °C for 48 hours, and then the temperature was increased to 1,800 °C at a temperature increasing rate of 20 °C/minute. The degreased green compact was sintered under a nitrogen atmosphere (pressure of 0.9 MPa) at the sintering temperature of 1,800 °C for 4 hours, so that a silicon nitride sintered body was formed. In Examples 27 to 29, the step (temperature keeping) that ntirides the green compact at the temperature of 1,400 °C for 4 hours was omitted.

The size of each of the green compacts and the silicon nitride sintered bodies of Examples and Comparative examples were measured using a micrometer, and a shrinkage rate was calculated based on the following formula. The shrinkage rate and the other measurement result are shown in Table 4.

$$\text{Shrinkage rate (\%)} = ((\text{diameter of green compact}) - (\text{diameter}$$

$$\text{of silicon nitride sintered body})) / (\text{diameter of green compact})$$

$$\times 100$$

Table 3 shows the composition rate of the oxides in the obtained silicon nitride sintered body calculated from the composition rate of the raw material powder based on a calculation condition that: the whole of the silicon (silicon metal) in the raw material powder is nitrided; and the weight of the silicon nitride is 1.67 times as large as the weight of the silicon.

The obtained spherical silicon nitride sintered body was polished to a sphere G5 based on JIS B 1563, and a spherical test piece having 3/8 inches (diameter of 9.525 mm) was formed.

Table 2

| | Composition of raw material | | | | | | | Sintering condition | |
|---|---|---|---|---|---|---|---|---|---|
| | Si | Si₃N₄ | Rare earth oxide | | Al₂O₃ | Transition metal oxide | | Sintering temperature (°C) | Temperature increasing rate (°C/minute) |
| | Content (wt%) | Content (wt%) | Kind | Content (wt%) | Content (wt%) | Kind | Content (wt%) | | |
| Example 1 | 75 | - | $Y_2O_3$ | 12 | 12 | $Cr_2O_3$ | 1 | 1,800 | 2.5 |
| Example 2 | 65 | 10 | $Y_2O_3$ | 12 | 12 | $Cr_2O_3$ | 1 | 1,800 | 2.5 |
| Example 3 | 55 | 20 | $Y_2O_3$ | 12 | 12 | $Cr_2O_3$ | 1 | 1,800 | 2.5 |
| Example 4 | 45 | 30 | $Y_2O_3$ | 12 | 12 | $Cr_2O_3$ | 1 | 1,800 | 2.5 |
| Comparative example 1 | 85 | < | $Y_2O_3$ | 7 | 7 | $Cr_2O_3$ | 1 | 1,800 | 2.5 |
| Example 5 | 80 | - | $Y_2O_3$ | 9.5 | 9.5 | $Cr_2O_3$ | 1 | 1,800 | 2.5 |
| Example 6 | 70 | - | $Y_2O_3$ | 14.5 | 14.5 | $Cr_2O_3$ | 1 | 1,800 | 2.5 |
| Example 7 | 65 | - | $Y_2O_3$ | 17 | 17 | $Cr_2O_3$ | 1 | 1,800 | 2.5 |
| Comparative example 2 | 60 | - | $Y_2O_3$ | 19.5 | 19.5 | $Cr_2O_3$ | 1 | 1,800 | 2.5 |
| Example 8 | 75 | - | $Y_2O_3$ | 12 | 12 | $TiO_2$ | 1 | 1,800 | 2.5 |
| Example 9 | 75 | - | $Y_2O_3$ | 12 | 12 | MnO | 1 | 1,800 | 2.5 |
| Example 10 | 75 | - | $Y_2O_3$ | 12 | 12 | $Fe_2O_3$ | 1 | 1,800 | 2.5 |
| Example 11 | 75 | - | $CeO_2$ | 12 | 12 | $Cr_2O_3$ | 1 | 1,800 | 2.5 |
| Example 12 | 75 | - | $Nd_2O_3$ | 12 | 12 | $Cr_2O_3$ | 1 | 1,800 | 2.5 |
| Example 13 | 75 | - | $Eu_2O_3$ | 12 | 12 | $Cr_2O_3$ | 1 | 1,800 | 2.5 |
| Example 14 | 70 | - | $Y_2O_3$ | 15 | 15 | - | | 1,800 | 2.5 |
| Example 15 | 70 | - | $Y_2O_3$ | 14.95 | 14.95 | $Cr_2O_3$ | 0.1 | 1,800 | 2.5 |
| Example 16 | 70 | - | $Y_2O_3$ | 12.5 | 12.5 | $Cr_2O_3$ | 5 | 1,800 | 2.5 |
| Example 17 | 70 | - | $Y_2O_3$ | 10 | 10 | $Cr_2O_3$ | 10 | 1,800 | 2.5 |
| Example 18 | 75 | - | $Y_2O_3$ | 12 | 12 | $Cr_2O_3$ | 1 | 1,550 | 2.5 |

(continued)

| | Composition of raw material | | | | | | | Sintering condition | |
|---|---|---|---|---|---|---|---|---|---|
| | Si | Si$_3$N$_4$ | Rare earth oxide | | Al$_2$O$_3$ | Transition metal oxide | | Sintering temperature (°C) | Temperature increasing rate (°C/minute) |
| | Content (wt%) | Content (wt%) | Kind | Content (wt%) | Content (wt%) | Kind | Content (wt%) | | |
| Example 19 | 75 | - | Y$_2$O$_3$ | 12 | 12 | Cr$_2$O$_3$ | 1 | 1,600 | 2.5 |
| Example 20 | 75 | - | Y$_2$O$_3$ | 12 | 12 | Cr$_2$O$_3$ | 1 | 1,700 | 2.5 |
| Example 21 | 75 | - | Y$_2$O$_3$ | 12 | 12 | Cr$_2$O$_3$ | 1 | 1,900 | 2.5 |
| Example 22 | 75 | - | Y$_2$O$_3$ | 12 | 12 | Cr$_2$O$_3$ | 1 | 1,950 | 2.5 |
| Example 23 | 75 | - | Y$_2$O$_3$ | 12 | 12 | Cr$_2$O$_3$ | 1 | 1,800 | 5 |
| Example 24 | 75 | - | Y$_2$O$_3$ | 12 | 12 | Cr$_2$O$_3$ | 1 | 1,800 | 10 |
| Example 25 | 75 | - | Y$_2$O$_3$ | 12 | 12 | Cr$_2$O$_3$ | 1 | 1,800 | 15 |
| Example 26 | 75 | - | Y$_2$O$_3$ | 12 | 12 | Cr$_2$O$_3$ | 1 | 1,800 | 20 |
| Example 27 | 75 | - | CeO$_2$ | 12 | 12 | Cr$_2$O$_3$ | 1 | 1,800 | 20 |
| Example 28 | 75 | - | Nd$_2$O$_3$ | 12 | 12 | Cr$_2$O$_3$ | 1 | 1,800 | 20 |
| Example 29 | 75 | - | Eu$_2$O$_3$ | 12 | 12 | Cr$_2$O$_3$ | 1 | 1,800 | 20 |
| Example 30 | - | 80 | Y$_2$O$_3$ | 10 | 10 | - | | 1,800 | 2.5 |

Table 3

| | Composition of silicon nitride sintered body | | | |
|---|---|---|---|---|
| | Si$_3$N$_4$ | Rare earth element | Aluminum element | Transition metal |
| | Content (wt%) | Content (wt%) (in terms of oxide) | Content (wt%) (in terms of oxide) | Content (wt%) (in terms of oxide) |
| Example 1 | 83.4 | 7.99 | 7.99 | 0.67 |
| Example 2 | 82.6 | 8.36 | 8.36 | 0.7 |
| Example 3 | 81.7 | 8.77 | 8.77 | 0.73 |
| Example 4 | 80.8 | 9.22 | 9.22 | 0.77 |
| Comparative example 1 | 90.4 | 4.46 | 4.46 | 0.64 |
| Example 5 | 87 | 6.18 | 6.18 | 0.65 |
| Example 6 | 79.6 | 9.87 | 9.87 | 0.68 |
| Example 7 | 75.6 | 11.84 | 11.84 | 0.7 |
| Comparative example 2 | 71.5 | 13.91 | 13.91 | 0.71 |
| Example 8 | 83.4 | 7.99 | 7.99 | 0.67 |
| Example 9 | 83.4 | 7.99 | 7.99 | 0.67 |
| Example 10 | 83.4 | 7.99 | 7.99 | 0.67 |
| Example 11 | 83.4 | 7.99 | 7.99 | 0.67 |
| Example 12 | 83.4 | 7.99 | 7.99 | 0.67 |
| Example 13 | 83.4 | 7.99 | 7.99 | 0.67 |
| Example 14 | 79.6 | 10.21 | 10.21 | - |
| Example 15 | 79.6 | 10.18 | 10.18 | 0.07 |
| Example 16 | 79.6 | 8.51 | 8.51 | 3.4 |
| Example 17 | 79.6 | 6.81 | 6.81 | 6.81 |
| Example 18 | 83.4 | 7.99 | 7.99 | 0.67 |
| Example 19 | 83.4 | 7.99 | 7.99 | 0.67 |
| Example 20 | 83.4 | 7.99 | 7.99 | 0.67 |
| Example 21 | 83.4 | 7.99 | 7.99 | 0.67 |
| Example 22 | 83.4 | 7.99 | 7.99 | 0.67 |
| Example 23 | 83.4 | 7.99 | 7.99 | 0.67 |
| Example 24 | 83.4 | 7.99 | 7.99 | 0.67 |
| Example 25 | 83.4 | 7.99 | 7.99 | 0.67 |
| Example 26 | 83.4 | 7.99 | 7.99 | 0.67 |
| Example 27 | 83.4 | 7.99 | 7.99 | 0.67 |
| Example 28 | 83.4 | 7.99 | 7.99 | 0.67 |
| Example 29 | 83.4 | 7.99 | 7.99 | 0.67 |
| Example 30 | 80 | 10 | 10 | - |

Measurement of maximum diameter and area ratio of inclusion (I) and measurement of maximum diameter of pore

Each of the test pieces of Examples and Comparative examples was cut on a section passing the center thereof, and the cutting face was mirror-polished. The mirror-polished cutting face was photographed using VHX5000 produced by KEYENCE CORPORATION, and the photographed image was analyzed using WinRoof produced by MITANI CORPORATION, so that the maximum diameter of the inclusion (I) and the maximum diameter of a pore in the surface layer portion that is a region within 2 mm from the surface of the spherical test piece were measured. The diameter of each of the inclusion (I) and the pore was calculated as a square root of an enveloped area of each of the inclusion (I) and the pore (diameter of inclusion (I) or pore = √ (enveloped area of inclusion (I) or pore)). The test piece with no inclusion (I) having a diameter of 50 μm or more in the surface layer portion is evaluated as "A", and the test piece with the inclusion (I) having a diameter of 50 μm or more in the surface layer portion is evaluated as "B". Further, the test piece with no pore having a diameter of 50 μm or more in the surface layer portion is evaluated as "A", and the test piece with the pore having a diameter of 50 μm or more in the surface layer portion is evaluated as "B". The inclusion (I) of which the all portion exists in the surface layer portion and the pore of which the all portion exists in the surface layer portion are targets to be measured. Further, a ratio of the total sectional area of the inclusions (I) to the total sectional area of the surface layer portion was calculated (ratio of total sectional area of inclusions (I) = enveloped area of inclusions (I) / total sectional area of surface layer portion × 100) . The result is shown in Table 4.

Evaluation of fracture toughness

The test piece of each of Examples and Comparative examples was cut on a section passing the center thereof, and the cutting face was mirror-polished. Thereafter, the fracture toughness was measured based on JIS R 1607.

Measurement of crushing strength

A two balls crushing test was executed on the test piece of each of Examples and Comparative examples . The crushing test is based on JIS B 1501.

Rolling fatigue test

A rolling fatigue test was executed on the test piece of each of Examples and Comparative examples using 6206 produced by NTN CORPORATION as a bearing outer ring, a bearing inner ring, and a cage. The rolling fatigue test was executed for test time of 168 hours at a rotation speed of 3,000 rpm and a load of 1.5 GPa, and the product lifetime was evaluated. As the lubrication oil, inorganic turbine oil VG56 produced by JXTG ENERGY CORPORATION. The test piece in which the flaking is not caused during the test time is evaluated as "a", and the test piece in which the flaking is caused is evaluated as "b". The result is shown in Table 4.

Table 4

| | Wet manner | | | | | | |
|---|---|---|---|---|---|---|---|
| | Shrinkage rate (%) | Maximum diameter of inclusion (I) (μm) | Area ratio of inclusion (I) (%) | Maximum diameter of pore (μm) | Fracture toughness (MPa·m$^{1/2}$) | Crushing strength (kN) | Rolling fatigue test |
| Example 1 | 13.4 | A | 0.78 | A | 5.5 | 15.8 | a |
| Example 2 | 15.1 | A | 0.77 | A | 5.5 | 15.8 | a |
| Example 3 | 17.9 | A | 0.72 | A | 5.6 | 15.4 | a |
| Example 4 | 18.4 | A | 0.75 | B | 5.4 | 15.8 | b |
| Comparative example 1 | 10.5 | B | 5.21 | A | 4.5 | 10.1 | b |
| Example 5 | 13.2 | A | 2.1 | A | 5.8 | 14.1 | a |
| Example 6 | 13.1 | A | 0.71 | A | 5.6 | 15.3 | a |
| Example 7 | 13.4 | A | 0.7 | A | 5.5 | 15.8 | a |

(continued)

| | Wet manner | | | | | | |
|---|---|---|---|---|---|---|---|
| | Shrinkage rate (%) | Maximum diameter of inclusion (I) ($\mu$m) | Area ratio of inclusion (I) (%) | Maximum diameter of pore ($\mu$m) | Fracture toughness (MPa·m$^{1/2}$) | Crushing strength (kN) | Rolling fatigue test |
| Comparative example 2 | 14.3 | A | 0.68 | A | 4.9 | 11.6 | b |
| Example 8 | 12.9 | A | 0.98 | A | 5.2 | 15.1 | a |
| Example 9 | 13.1 | A | 0.19 | A | 5.1 | 15.5 | a |
| Example 10 | 13 | B | 1.2 | A | 5.3 | 10 | b |
| Example 11 | 13.5 | A | 0.81 | A | 5.7 | 15.8 | a |
| Example 12 | 13.1 | A | 0.79 | A | 5.5 | 16 | a |
| Example 13 | 13.2 | A | 0.8 | A | 5.4 | 15.2 | a |
| Example 14 | 12.9 | A | 0.05 | A | 4.8 | 15 | a |
| Example 15 | 13 | A | 0.09 | A | 5.9 | 15.1 | a |
| Example 16 | 13.3 | A | 6.2 | A | 6.5 | 14.2 | a |
| Example 17 | 12.5 | A | 9.89 | A | 7.1 | 11.7 | b |
| Example 18 | 12 | A | 0.93 | B | 4.8 | 9.1 | b |
| Example 19 | 12.5 | A | 0.9 | A | 4.1 | 14.2 | a |
| Example 20 | 13.1 | A | 0.88 | A | 4.3 | 15.4 | a |
| Example 21 | 14.4 | A | 1.09 | A | 6.2 | 13.9 | a |
| Example 22 | 15.7 | A | 2.06 | B | 7.7 | 10.9 | b |
| Example 23 | 13.2 | A | 0.75 | A | 5.2 | 15.2 | a |
| Example 24 | 13.4 | A | 0.71 | A | 5.4 | 15.2 | a |
| Example 25 | 13.5 | A | 0.63 | A | 5.5 | 15.6 | a |
| Example 26 | 13.6 | A | 0.7 | A | 5.2 | 15.1 | a |
| Example 27 | 14.1 | A | 0.68 | A | 5.6 | 15.5 | a |
| Example 28 | 14.5 | B | 6 | B | 3.3 | 8 | b |
| Example 29 | 12.8 | B | 2.22 | B | 3.9 | 9.1 | b |
| Example 30 | 20.5 | A | 0.02 | A | 5 | 15.9 | a |

Analysis of inclusion (I)

The cutting face of the test piece of Example 6 was subjected to an EDX analysis using a scanning electron microscope (S300 produced by Hitachi, Ltd.), and the kind and the content of the element of the inclusion (I) in the surface layer portion were measured. It was found that the inclusion (I) contains a silicide of chromium, and the elements and the contents thereof in the inclusion (I) are chromium (Cr) of 56 wt% and silicon (Si) of 44 wt%.

Test Example 2

In a test example 2, the granulated powders were formed by dry-mixing, except Example 30. The raw material powders shown in Table 1 were prepared at the composition rate shown in Table 2.

Examples 1 to 29, Comparative examples 1 and 2

The raw material powder was mixed in a dry manner for 48 hours by a ball mill at a rotation speed of 200 rpm using a silicon nitride ball as medium. A spherical green compact having a diameter of 11 mm was molded from the obtained mixed powder by a cold isostatic pressing method using a rubber mold. The green compact was heated such that the temperature was increased from a room temperature to 1,550-1,950 °C at a temperature increasing rate of 2.5-20 °C/minute as shown in Table 2, and then the green compact was sintered under a nitrogen atmosphere (pressure of 0.9 MPa) for 4 hours while keeping the sintering temperature, so that a silicon nitride sintered body was formed.

Example 30

The organic binder was added to the raw material powder by 3 wt% relative to the whole of the raw material powder. A silicon nitride ball was employed as medium. By using ethanol as solvent, they were mixed for 48 hours by a ball mill at a rotation speed of 200 rpm. The slurry after mixing was sprayed and dried by the spray dry method to form granulated powder. A spherical green compact having a diameter of 11 mm was molded from the obtained granulated powder by the cold isostatic pressing method using a rubber mold. The green compact was degreased under a nitrogen atmosphere at a temperature of 800 °C for 48 hours, and then the temperature was increased to 1,800 °C at a temperature increasing rate of 2.5 °C/minute. The degreased green compact was nitrided under a nitrogen atmosphere (pressure of 0.9 MPa) for 4 hours while keeping the sintering temperature of 1,800 °C, so that a silicon nitride sintered body was formed.

The size of each of the green compacts and the silicon nitride sintered bodies of Examples and Comparative examples were measured using a micrometer, and the shrinkage rate was calculated similar to the above-described test example 1. The result is shown in Table 5.

The obtained spherical silicon nitride sintered body was polished to a sphere G5 based on JIS B 1563, and a spherical test piece having 3/8 inches (diameter of 9.525 mm) was formed.

Similar to the above-described test example 1, the measurement of the maximum diameter and the area rate of the inclusion (I), the measurement of the maximum diameter of the pore, the evaluation of the fracture toughness, the measurement of the crushing strength, and the rolling fatigue test were executed on the obtained test pieces of Examples and Comparative examples. The result is shown in Table 5.

Table 5

| | Dry manner | | | | | | |
|---|---|---|---|---|---|---|---|
| | Shrinkage rate (%) | Maximum diameter of inclusion (I) ($\mu$m) | Area ratio of inclusion (I) (%) | Maximum diameter of pore ($\mu$m) | Fracture toughness (MPa·m$^{1/2}$) | Crushing strength (kN) | Rolling fatigue test |
| Example 1 | 11.2 | A | 0.75 | A | 5.2 | 15.7 | a |
| Example 2 | 12 | A | 0.76 | A | 5.3 | 15.2 | a |
| Example 3 | 12.9 | A | 0.71 | A | 5.5 | 15.6 | a |
| Example 4 | 15.7 | A | 0.78 | B | 5.5 | 15.8 | b |
| Comparative example 1 | 8.5 | B | 5.11 | A | 4.2 | 10.1 | b |
| Example 5 | 10.9 | A | 2.2 | A | 5.5 | 14.1 | a |
| Example 6 | 11.6 | A | 0.76 | A | 5.4 | 15.3 | a |
| Example 7 | 11.7 | A | 0.81 | A | 5.2 | 15.8 | a |
| Comparative example 2 | 12.3 | A | 0.71 | A | 4.7 | 11.6 | b |
| Example 8 | 11.1 | A | 0.86 | A | 5 | 15.1 | a |
| Example 9 | 11.3 | A | 0.23 | A | 5 | 15.5 | a |
| Example 10 | 10.8 | B | 1.41 | A | 5.1 | 10 | b |
| Example 11 | 11.5 | A | 0.62 | A | 5.6 | 15.8 | a |

(continued)

| | Dry manner | | | | | | |
|---|---|---|---|---|---|---|---|
| | Shrinkage rate (%) | Maximum diameter of inclusion (I) ($\mu$m) | Area ratio of inclusion (I) (%) | Maximum diameter of pore ($\mu$m) | Fracture toughness (MPa·m$^{1/2}$) | Crushing strength (kN) | Rolling fatigue test |
| Example 12 | 11.1 | A | 0.77 | A | 5.4 | 16 | a |
| Example 13 | 11.6 | A | 0.78 | A | 5.4 | 15.2 | a |
| Example 14 | 10.9 | A | 0.04 | A | 4.5 | 15 | a |
| Example 15 | 11 | A | 0.08 | A | 5.7 | 15.1 | a |
| Example 16 | 11.7 | A | 6.22 | A | 6.4 | 14.2 | a |
| Example 17 | 10.5 | A | 9.91 | A | 6.9 | 11.7 | b |
| Example 18 | 11.4 | A | 0.93 | B | 4.6 | 9.1 | b |
| Example 19 | 9.8 | A | 0.91 | A | 4 | 14.2 | a |
| Example 20 | 10.6 | A | 0.87 | A | 4.3 | 15.4 | a |
| Example 21 | 12.1 | A | 1.1 | A | 6.1 | 13.9 | a |
| Example 22 | 11.6 | A | 2.1 | B | 7.3 | 10.9 | b |
| Example 23 | 11.1 | A | 0.87 | A | 5.1 | 15.2 | a |
| Example 24 | 11.2 | A | 0.95 | A | 5.3 | 15.2 | a |
| Example 25 | 11 | A | 1.49 | A | 5.2 | 15.6 | a |
| Example 26 | 7.9 | B | 5.77 | B | 3.6 | 8.8 | b |
| Example 27 | 11.4 | A | 0.69 | A | 5.4 | 15.4 | a |
| Example 28 | 11.6 | B | 6.01 | B | 3.5 | 8.2 | b |
| Example 29 | 11.5 | B | 2.3 | B | 3.8 | 9.5 | b |
| Example 30 | 17.2 | A | 0.02 | A | 4.9 | 15.9 | a |

Next, a comparing between the test piece formed through wet granulating and the test piece formed through dry mixing was executed. The test pieces of Example 27 having superior results in both dry and wet manners (see Tables 4 and 5) were used for the comparing.

Measurement of maximum diameter of pore

Similar to the above-described test example 1, the maximum diameter of the pore in the surface layer portion of each test piece of Example 27 was measured. According to the results shown in Tables 4 and 5, the pore having a diameter of 50 $\mu$m or more does not exist in the surface layer portion of each test piece. In addition, whether the pore having a diameter of 10 $\mu$m or more exists in the surface layer portion was determined. The result is shown in Table 6.

Rolling fatigue test

A rolling fatigue test under a large load condition larger than the above-described test example 1 was executed on each test piece of Example 27. The load of 3.5 GPa and the test time of 630 hours are employed, and the other test condition are similar to those of the above-described test example 1. Whether the flaking of the test piece is caused during the test time was evaluated. The result is shown in Table 6.

Table 6

| | Pore having diameter of 10 μm or more | Flaking in rolling fatigue test under large load condition |
|---|---|---|
| Example 27 (wet manner) | Yes | Yes |
| Example 27 (dry manner) | No | No |

As shown in Table 6, the pore having the diameter of 10-50 μm exits in Example 27 (wet manner), while the pore having the diameter of 10 μm or more does not exist in Example 27 (dry manner) . The flaking is not caused in Example 27 (dry manner) in the rolling fatigue test under the large load condition. In the wet granulating that granulates particles using the organic binder, the granulated powder becomes harder than that formed in the dry mixing, so that the granulated powder is hardly crushed by pressuring and thus a gap is apt to remain between facing surfaces of the granulated particles in the molded body. The gap might cause failure of the sintered body depending on a use aspect. In the rolling fatigue test of Example 27 (wet manner), the sintered body was used as the rolling element under high surface pressure. As a result, the particle shedding was caused along the failure of the facing surfaces, which shortened the lifetime of the test piece.

The embodiment and the examples in this disclosure are merely exemplary and do not limit the scope of the present invention. The scope of the present invention is not defined by the above-described embodiment but the claims, and the equivalent of the claims and modifications of the claims are also encompassed by the scope of the present invention.

INDUSTRIAL APPLICABILITY

The silicon nitride sintered body of the present invention is suitably applied to a rolling element of a bearing such as a rolling bearing, a linear guide bearing, a ball bearing, and a linear bearing.

REFERENCE SIGNS LIST

1:          rolling bearing
2:          inner ring
3:          outer ring
4:          rolling element
5:          cage
6:          seal member
7:          grease
8a, 8b:   opening
11:        electric vertical take-off and landing aircraft
12:        body part
13:        driving part
14:        rotor blade
15:        motor
16:        housing
17:        rotational shaft
18:        inner ring seat
19:        outer ring seat
20:        nozzle member
21:        rolling bearing
22:        inner ring
23:        outer ring
24:        ball

**Claims**

1. A silicon nitride sintered body comprising a rear earth element and an aluminum element, wherein:

   the silicon nitride sintered body contains 6-13 wt% of the rare earth element in terms of oxide, relative to the total weight of the silicon nitride sintered body; and
   the silicon nitride sintered body contains 6-13 wt% of the aluminum element in terms of oxide, relative to the total weight of the silicon nitride sintered body.

2. The silicon nitride sintered body as defined in claim 1, wherein the rare earth element contains one or more of Y, Ce, Nd and Eu.

3. The silicon nitride sintered body as defined in claim 1, wherein the rare earth element contains Ce.

4. The silicon nitride sintered body as defined in claim 1, wherein:

   the silicon nitride sintered body contains an inclusion (I) in a surface layer portion that is a region within 2 mm from a surface of the silicon nitride sintered body, and
   a ratio of a total sectional area of the inclusion (I) to a total sectional area of the surface layer portion is 0. 05% or more.

5. The silicon nitride sintered body as defined in claim 4, wherein the inclusion (I) is an inclusion (It) containing a transition metal element.

6. The silicon nitride sintered body as defined in claim 5, wherein the inclusion (It) is a silicide of the transition metal element.

7. The silicon nitride sintered body as defined in claim 5, wherein the transition metal element contains one or more of Ti, Cr and Mn.

8. The silicon nitride sintered body as defined in claim 5, wherein the transition metal element contains Cr.

9. The silicon nitride sintered body as defined in claim 4, wherein the maximum diameter of the inclusion (I) is 50 $\mu$m or less.

10. The silicon nitride sintered body as defined in claim 1, wherein:

    the silicon nitride sintered body contains a pore in a surface layer portion that is a region within 2 mm from a surface of the silicon nitride sintered body, and
    the maximum diameter of the pore is 50 $\mu$m or less.

11. A rolling element formed of the silicon nitride sintered body as defined in claim 1.

12. A bearing comprising the rolling element as defined in claim 11.

13. The bearing as defined in claim 12, wherein the bearing is configured to support a rotational shaft of a driving part in an electric vertical take-off and landing aircraft comprising a plurality of the driving parts each having a rotor blade and a motor for rotating the rotor blade, the electric vertical take-off and landing aircraft being configured to fly by rotating rotor blades.

Fig.1

Fig.2

Fig.3

## INTERNATIONAL SEARCH REPORT

| International application No. |
|---|
| **PCT/JP2021/032051** |

### A. CLASSIFICATION OF SUBJECT MATTER

*C04B 35/596*(2006.01)i; *B64C 27/08*(2006.01)i; *B64C 27/14*(2006.01)i; *B64D 27/24*(2006.01)i; *F16C 19/02*(2006.01)i;
*F16C 19/06*(2006.01)i; *F16C 33/32*(2006.01)i; *F16C 33/62*(2006.01)i
FI: C04B35/596; F16C19/02; F16C33/32; F16C33/62; F16C19/06; B64C27/08; B64C27/14; B64D27/24

According to International Patent Classification (IPC) or to both national classification and IPC

### B. FIELDS SEARCHED

Minimum documentation searched (classification system followed by classification symbols)

C04B35/596; B64C27/08; B64C27/14; B64D27/24; F16C19/02; F16C19/06; F16C33/32; F16C33/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2007-297231 A (TOSHIBA MATERIALS CO LTD) 15 November 2007 (2007-11-15) paragraph claims 1 , 4 , paragraphs [0051], [0064] | 1, 2, 11-13 |
| X | JP 2014-129223 A (KYOCERA CORP) 10 July 2014 (2014-07-10) paragraphs [0001], [0002], [0012], [0037], [0038] | 1-3 |
| A | JP 2008-285349 A (TOSHIBA CORP) 27 November 2008 (2008-11-27) paragraphs [0009]-[0011], [0033], [0035] | 1-13 |
| A | JP 2000-256066 A (KYOCERA CORP) 19 September 2000 (2000-09-19) claims 1-3, paragraphs [0002], [0026] | 1-13 |
| A | JP 2001-192258 A (TOSHIBA CORP) 17 July 2001 (2001-07-17) claims 1-15 | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2021** | **02 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/032051**

| Patent document cited in search report | | | Publication date (day/month/year) | Patent family member(s) | Publication date (day/month/year) |
|---|---|---|---|---|---|
| JP | 2007-297231 | A | 15 November 2007 | (Family: none) | |
| JP | 2014-129223 | A | 10 July 2014 | (Family: none) | |
| JP | 2008-285349 | A | 27 November 2008 | (Family: none) | |
| JP | 2000-256066 | A | 19 September 2000 | (Family: none) | |
| JP | 2001-192258 | A | 17 July 2001 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013234120 A
- WO 2015099148 A
- JP 2004149328 A
- JP 2008247716 A
- JP 2013049595 A